(19) Europäisches Patentamt

European Patent Office

Office européen des brevets

(11) **EP 1 612 654 A1**

(12) **EUROPEAN PATENT APPLICATION**

(43) Date of publication:
**04.01.2006 Bulletin 2006/01**

(51) Int Cl.:
**G06F 3/033** (2006.01)

(21) Application number: **04015463.5**

(22) Date of filing: **01.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **TrendOn Touch Technology Corp.**
**Chung Ho City,**
**Taipei Hsien (TW)**

(72) Inventor: **Chien, Shun-Ta**
**Chung Ho City, Taipei Hsien (TW)**

(74) Representative: **Haft, von Puttkamer,**
**Berngruber, Czybulka**
**Patentanwälte**
**Franziskanerstrasse 38**
**81669 München (DE)**

(54) **Method of manufacturing circuit layout on touch panel by utilizing metal plating technology**

(57) The present invention is to provide a method of manufacturing a circuit layout on a touch panel by utilizing metal plating technology, comprising uniformly coating a conductive metal or conductive oxidized metal on predetermined areas proximate edges of a transparent conductive layer on a transparent glass substrate for forming a circuit by utilizing metal plating technology, which has the advantages of uniform thickness of circuit, higher hardness, better adhesion of the plated material to the underlying substrate, whether it is a resistive film or bare glass, improved weathering and chemical properties, and solderability.

FIG. 6

EP 1 612 654 A1

Printed by Jouve, 75001 PARIS (FR)

## Description

REFERENCES CITED

U.S. Patents

| | |
|---|---|
| 3,632,874 | Malavard |
| 3, 798,3 70 | Hurst |
| 3,911,215 | Hurst and Colwell, Jr. |
| 4,198,539 | Pepper, Jr. |
| 4,220,815 | Gibson and Talmage, Jr. |
| 4,371,746 | Pepper, Jr. |
| 4,661,655 | Gibson and Talmage, Jr. |
| 4,777,328 | Talmage, Jr. |
| 5,815,141 | Phares |
| 6,549,193 B1 | Huang |
| 6,650,319 | Hurst, et al. |

FIELD OF THE INVENTION

The present invention relates to methods of manufacturing circuit layout on a touch panel and more particularly to a novel method of manufacturing circuit layout on a touch panel by utilizing metal plating technology.

BACKGROUND OF THE INVENTION

Touch-based input devices (e.g., touch panels, or touch screens, or touchscreens) have been widely employed in a variety of electronic products (e.g., GPS (Global Positioning System) devices, PDAs (Personal Digital Assistants), cellular phones, and hand-held personal computers) as a replacement of well known computer input devices (e.g., keyboards and mice) and particularly as input devices for computers used in dedicated applications such as factory process automation machine control, and point of sale (POS) applications in retail businesses. The usability of many point of information (POI) kiosks are also enhanced by the employment of touchscreens. Such significant design improvement increases the convenience of operating the electronic products and, especially in dedicated purpose products, may allow replacement of hardware controls (e.g., switches and potentiometers) . This may further result in additional space being available for the design-in of a larger display. It may also serve as a design method for reducing the overall cost of such a device. As an end, a user can easily control an instrument, operate a software program, or browse information.

The primary, but not exclusive, application of touchscreens is for use with a video display controlled by a computer or some type of microprocessor-controlled instrument. Since most display devices for computer use are rectangular, with aspect ratios ranging from square to more than 16:9, most touchscreens are also constructed as rectangular devices. Also, many displays are planar, and thus touchscreens which conform to the shape of these planar displays are planar as well. However, other aspect ratios and indeed, other shapes of touchscreens other than rectangular, and non-planar touchscreens, for use with spherical or cylindrical CRT displays, are all well known (e.g., Gibson and Talmage (U.S. Patent 4,220, 815), Pepper, Jr. (4,371,746) and Talmage, et. al. (4,777,328)).

A touch system is usually comprised of a touchscreen, which is the physical portion of the system that the user looks through at the associated display and touches with finger or stylus, and a controller, which applies a control or drive signal to the touchscreen and processes the information received from the touchscreen. The intent of the touchscreen and its companion controller is to report to the host computer that a particular location on the touchscreen has been touched by the user. While not explicitly stated in the specifications of most touchscreen components or systems, the touchscreen controller usually reports the touched location in Cartesian, or rectangular, coordinates. These coordinates may or may not describe the coordinate space of the display in the form that the computer or other controller can use directly, but each coordinate report from the touchscreen controller does describe a unique point on the touchscreen's Cartesian plane. It is common that some interpreter, or driver, software further processes the touch data received from the touchscreen controller, and further processes and normalizes it to the coordinate space of the display, or converts the touch data into a form compatible with that of some other input device, such as a mouse. Regardless of the device that the touch system may emulate, it is important to recognize that the touch system is always an absolute positioning device and derives all of its function from the accurate and fast reporting of the location of the precise position that is touched. In response to a touch, the computer may perform some action based on the precise touch location touched, or may create a representation on the display corresponding to the location of touch, and this representation, which could be an icon, or a text character, or a spot of color, or some other unique identifier, could be as small as the smallest resolvable location on the display, commonly known in the display industry as a pixel. Depending on the intended mode of operation of the touchscreen and the instrument, it is obvious that by creating a continuous display of pixels in response to a user's dragging a finger or other stylus across the touchscreen, the user could be said to be writing on the touchscreen.

Touch technologies commonly used in touchscreens are known to those skilled in the art as infrared, surface wave, capacitive, and resistive.

Resistive touchscreens are the most widely employed.. Included in the resistive touchscreen category are several types of devices. One type is known as a digital, or switch-matrix resistive touchscreen. This touchscreen is constructed on planar sheets of substantially transparent glass, or plastic, or a combination thereof. The active area of the touchscreen (defined elsewhere) is comprised of a multiplicity of electrically conductive circuits, typically of uniform size in one dimension and regularly disposed across one of the two active layers of the said planar sheets in the viewable, or active, area of the touchscreen. A portion of the circuits, M, are applied to and disposed across the first layer, and the remainder of the circuits, N, are similarly but orthogonally disposed across the second layer. The surfaces of the first and second layers containing said circuits are adjacent to each other, being separated by a plurality of small (typically 0.010" diameter or less) regularly spaced insulating islands which maintain a minimum distance between the first and second sheets and prevent contact between the circuits when the touchscreen is not being touched by a user. This minimum distance is set by the thickness of the said insulating islands, and typically is less than 0.001." Each circuit is externally connected to an electronic controller which detects contact between one or more circuits in the first layer and one or more circuits in the second layer of the sheets resulting from a force applied to the outer sheet of the touchscreen. The outer sheet (e.g., the surface of the sheet of the touchscreen closer to the user) which should be flexible enough to deflect from a small force, is pressed by a finger or other stylus. Typical activation forces with a finger range in practical touchscreens from 1 to 12 ounces or more. With M circuits on the first layer, and N circuits on the second layer, the total number of touch locations resolvable by the complete device is MxN. The circuits in the device described are usually constructed of thin layers of substantially transparent conducting material (such as indium-tin oxide (ITO), tin-antimony oxide (TAO), nickel, gold or a suitable combination of these or other materials as appropriate for the intended application) in the active or viewable area, especially if the device is to be placed over an information display (e.g., one in which the content of the display can change over time, or in response to the input of the operator). However, it is not necessary that the circuits are constructed of substantially transparent material, nor is application of the considered device limited to use with the described information display. Substantially transparent touchscreen devices, of the digital or switch-matrix type, and also of the analog resistive type considered later, or of any other type of touchscreen device, are also used with fixed information panels, including pictures, menus, charts, diagrams, instructions, outlines of the touch sensitive locations whether filled or not filled with a distinct color, or legends for touchable locations on the touchscreen (which may be also considered as virtual buttons or switches, for which the information panel describes the function thereof), which may be disposed behind or in front of said touchscreen device, Moreover, it is not necessary that the information that guides the user as to the available touch locations consist of a separate panel, rather it may be painted, screen printed, appliquéd, or applied by any other method directly to the either of the two exterior surfaces of the touchscreen. Said information is disposed as to be appropriately aligned with the touch sensitive locations when the touchscreen is viewed normally, that is, when the user's viewing position is near an imaginary line projected perpendicularly from the plane of the two active layers. Nor is it necessary that the information be viewed by the user to successfully interact with said touchscreen. The appropriate legends as described to guide the user to said touch sensitive locations may be supplemented with or replaced entirely by Braille legends or other textured regions suitably disposed across the exterior surface of the touchscreen for the visually impaired. Users may also be guided to appropriate touch sensitive locations on said device by audible prompts and suggestions, further enhancing the use by the visually impaired. Thus the term touchscreen as used in consideration of this invention, describes a broad class of devices not limited to the descriptions of the device in the preferred embodiment.

Another class of resistive touchscreens distinct from the digital or switch-matrix touchscreens is known as analog resistive touchscreens. These analog resistive touchscreens are generally what are referred to as resistive touchscreens by those skilled in the art. Analog resistive touchscreens are normally constructed of planar glass or plastic sheets, similar to those described for digital or switch-matrix touchscreens, but employing peripheral circuits connected to continuous, substantially transparent conductive films in the active area, with typically one continuous conductive film for each active layer. It will be seen in the following discussion that there are many variations in this class of devices that properly are called resistive touchscreens regardless of the particular name given, and that distinctions which are claimed based on the number of external active circuits employed are not meaningful in the context of the present invention.

Analog resistive touchscreen prior art has existed for more than twenty-five years. In that time, a multiplicity of methods for exciting and controlling these touchscreens have been developed, and names for these touchscreens, frequently based on the number of externally connected active circuits, have come into common use by those skilled in the art. We will briefly describe the typical variations, and show that for consideration of the present invention, these variations and others not described are within the scope of the invention.

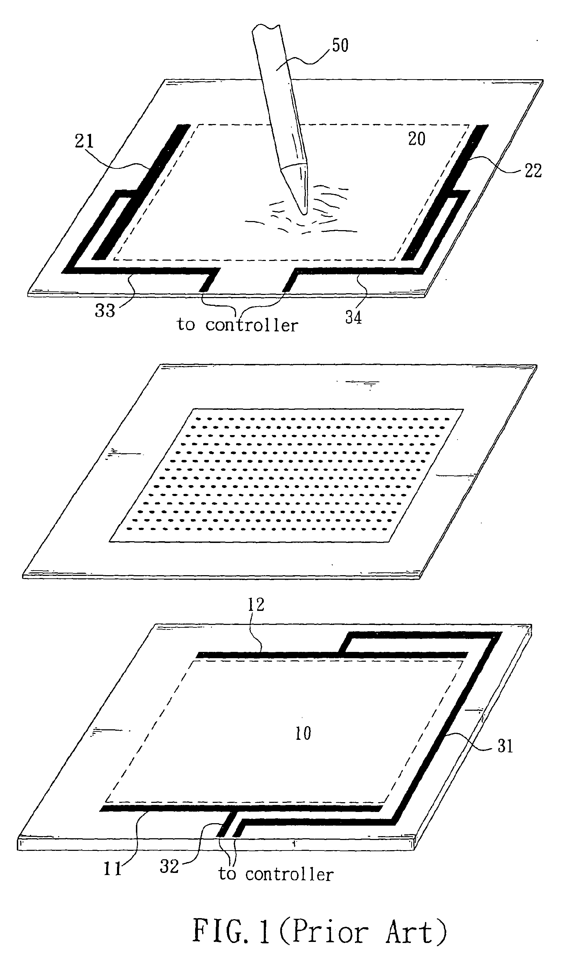

The simplest analog resistive touchscreen is a four-wire type. This prior art is shown in Figure 1. The touchscreen consists of two sheets of plastic and/or glass (10, 20) coated with a substantially transparent (80-90% light transmission or more) conductive film of uniform resistivity (typically no worse than +/- 10%) deposited on the inner, or facing, surfaces of a first and second sheet. This film is commonly called a resistive film to distinguish it from a conductive film that does not have the uniform resistivity requirement, and the importance of this distinction will become apparent when considering other resistive touchscreen variations. At opposite ends of each sheet, proximate the edge of the sheet, a very conductive bus bar or strip electrode (21, 22) is deposited on top of the resistive film so as to be intimately electrically connected to the resistive film. The method of deposition will be considered later in this application, but may be by a variety of methods, As seen in Fig. 1, the bus bars on the first sheet are arranged orthogonally to the bus bars on the second sheet. As long as each pair of bus bars deposited on a first sheet are orthogonal to a set of bus bars deposited on the second sheet, the specific arrangement of bus bars is not specified or important to the function of the touchscreen. The positions and dimensions of the bus bars on the first and second sheets together define the limits of the active area of the touchscreen (e.g., the area in which a touch can be performed) as shown in Fig 1. This active area is also sometimes called the viewable area, though in practice the two may be made slightly different by manipulation of the exact size and position of the bus bars and the resistive film to which they are attached, and by placement of insulating layers to further limit the boundaries of possible contact between the resistive films in the plane of the first and second sheets. Appropriate connections (31,32,33,34), also referred to as drive traces or drive lines, to an external electronic controller are made to each bus bar. A center-connected drive line is shown for clarity, but in practice an end-connected drive line may be used as well. One object of the present invention will be to clarify the technical requirements for this connection and demonstrate the improvement that the present invention brings to this feature. The function of the four-wire touchscreen follows the well-known principle of the electronic voltage divider, or potentiometer. In a first operation, the controller, which is commonly a microprocessor-controlled instrument, applies a potential, usually 5 volts DC or less, across either resistive sheet, by application of appropriate electric potentials to the pair of bus bars on the selected resistive sheet. The resultant current sets up a potential gradient on the sheet between the two bus bars for that sheet. If the system of Fig 1 is considered, and the potential is applied to the first sheet (10), then the second sheet (20) is used as a voltage probe for the first sheet. Finger or stylus force applied by the user (50), causes the second sheet to make mechanical and electrical contact with the first sheet. The voltage on the first sheet is coupled to the second sheet. By appropriate logic from the controller microprocessor and switching of the electronic circuits attached to the second sheet, the voltage on the second sheet is coupled to a high impedance input on the controller which may first buffer or filter this voltage, but ultimately performs an analog to digital conversion on said voltage in preparation for storage and further processing. The voltage on the first sheet coupled to the second sheet and then to the controller, whether in its analog form or its later digital form, is proportional to the position on the first sheet relative to the location of the bus bars, that was contacted by the second sheet in response to the user's touch. Thus the location of the touch is determined in one axis or direction only. To uniquely determine the actual planar location of the user's touch in both directions or axes requires a second operation. The second operation is similar to the first operation described. In the second operation, the touch which produced the operation described above that determined the position of touch on the first sheet will now be used to determine the position of touch on the second sheet. In the second operation the controller applies a similar potential to the second sheet as was applied to the first sheet in the first operation. The first sheet is now configured by the controller for use as the voltage probe, and the potential gradient thus developed on the second sheet is coupled to the first sheet and further coupled to the controller for processing identical to that performed in the first operation. This second signal represents the location of touch on the second sheet. With a location of touch on both the first and second sheets, a unique planar location of touch is determined. The details of the actual process of acquiring, processing and reporting the location of a touch to a host computer or other device are well known to those skilled in the art.

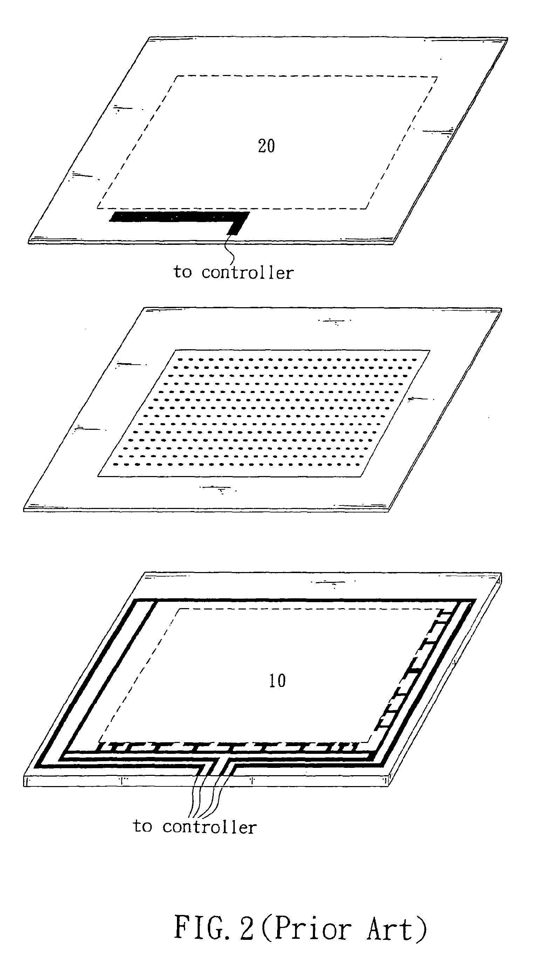

Another type of prior art analog resistive touchscreen is the five-wire type. The construction of the five-wire touchscreen is shown in Fig 2. In the five-wire type, there is only a first resistive sheet (10). This sheet is typically the bottom or lower sheet, or that which is away from the user. It is also common that this first resistive sheet is made of glass, A second sheet (20), facing the user, is also coated with a conductive film. The conductive film is on the inside surface of the second sheet, facing the first sheet. The conductive film on the second sheet does not have the resistivity requirements as described for the first sheet, rather, while the nominal resistivity may be specified in some range, the +/-10% uniformity requirement may not be present. Thus, the film on this sheet of the five-wire touchscreen is referred to as having a conductive coating as distinct from a resistive coating. In the five wire touchscreen, all of the electrical information that determines the location of a user's touch is developed on the first resistive sheet. Electrically, the second sheet is used only as a voltage probe, or in some arrangements, a current source or sink. Five-wire touchscreen systems also require some peripheral electrical circuits disposed along the outer edges of the active area (11,12,13,14,15,16,17,18), to develop the appropriate voltage gradients, current distributions or other electrical analog for position determination, similar in ultimate function but different in design principle to the bus bars of the 4-wire touchscreen. Briefly, appropriate potentials are applied to the nodes of the four peripheral circuits by the controller to create a uniform potential gradient on the first resistive sheet, oriented across one major mechanical axis of the touchscreen. The conductive sheet (20) picks off the potential from the first sheet when a touch occurs, similar to that described for the 4-wire touchscreen. To obtain the orthogonal touch position, the controller then changes the applied potentials such that a second potential gradient orthogonal to the first potential gradient is developed on the resistive sheet. The conductive sheet again picks off the potential from the first sheet at the point of touch. The rest of the operation is similar to that described for a 4-wire touchscreen. The designs for the 5-wire peripheral circuits may be for the touchscreen only, or may also require specific designs for controllers as well. Designs for such five wire touchscreens and controllers are numerous. However, it is also widely recognized to those skilled in the art that many of the five-wire and derivative touchscreens and their respective controllers, are interchangeable in their basic function. One object of the present invention will be to demonstrate that these many five-wire and derivative touchscreens are equivalent for consideration of the present invention. Figure 2 shows one of the common designs, that of Gibson and Talmage (Gibson, W.A., and Talmage, Jr., J.E., U.S. Patent 4,661,655). In this prior art, the peripheral electrical circuits are designed for use with a controller which develops the aforementioned sequential orthogonal voltage gradients on the first resistive sheet in response to a user's touch. Thus a unique planar location of touch can be determined by this system. Other designs for five-wire touchscreens, especially those attempting to produce more uniform potential gradients, and also those which minimize the area of the peripheral circuits perpendicular to the edge of the resistive sheet along which the circuits are disposed, are the subject of many U.S. Patents, and are included in this application by reference only. [Cite Malavard (3,632,874); Hurst (3,798, 370); Hurst and Colwell, Jr. (3,911,215); and Pepper, Jr. (4,198,539)]

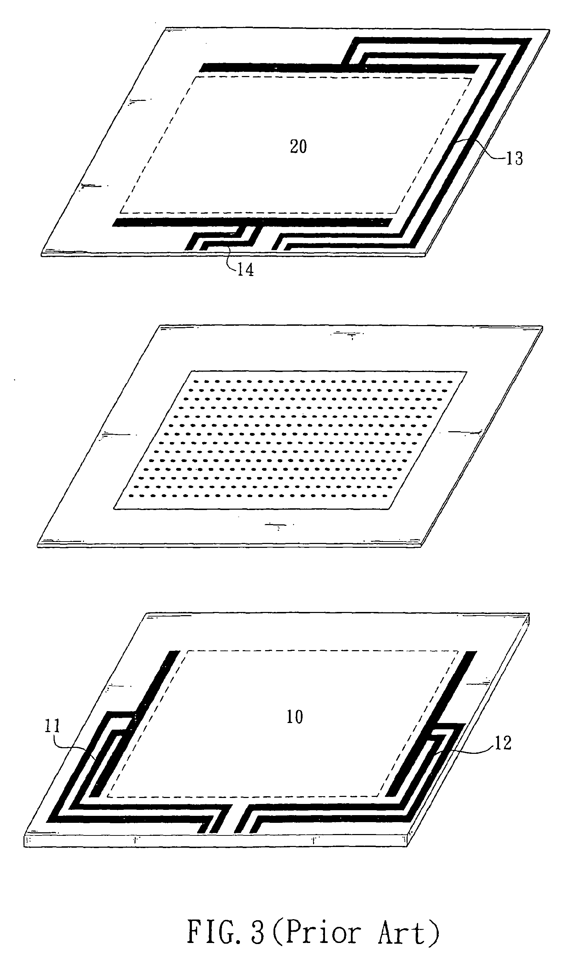

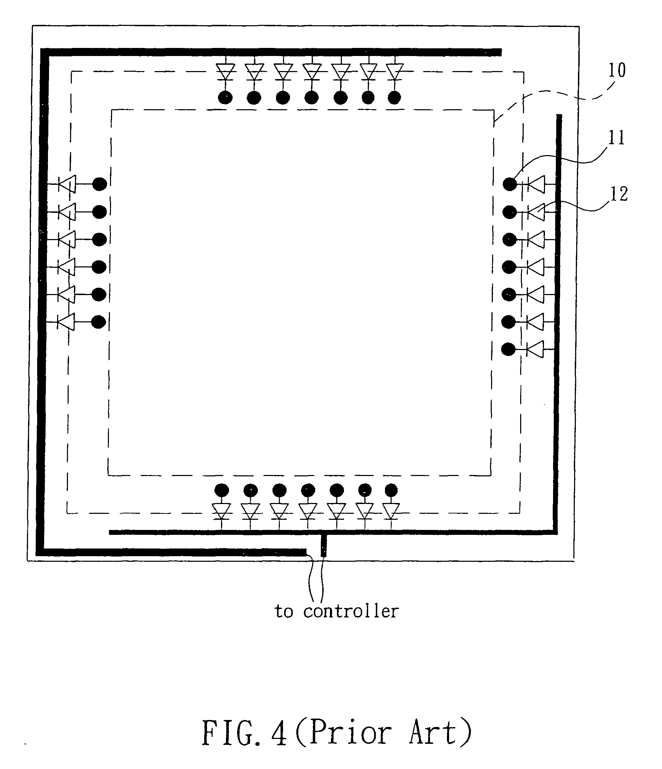

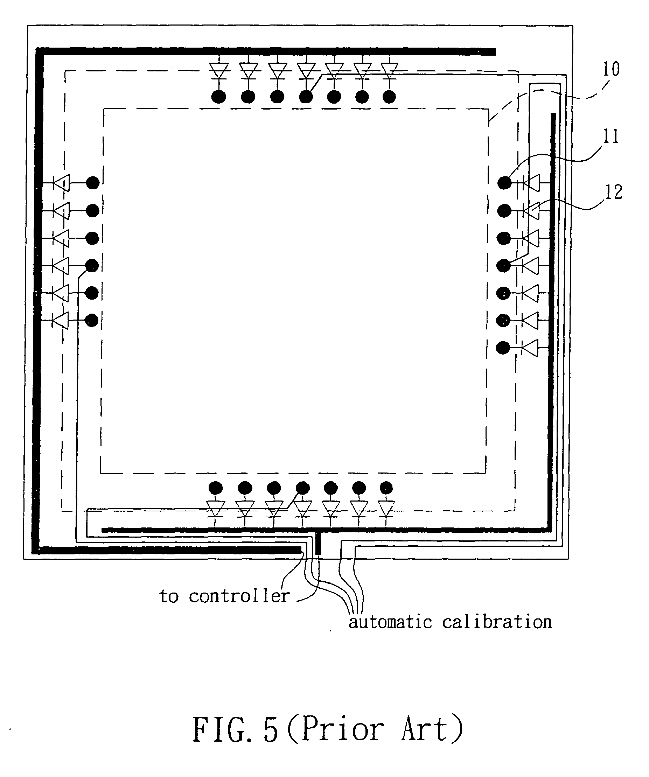

Variations on four-wire and five-wire touchscreens are frequently referred to by the number of external electrical terminations present. These include, but are not limited to, the following types of touchscreens: (1) "8-wire" which describes a 4-wire touchscreen with four remote-sensing circuits, These circuits provide a feedback signal to the controller to correct for voltage drop in the circuit between the controller and the point at which the circuit is connected to the bus bar described in Fig. 1, and may be further employed as a means of automatic calibration of the touchscreen, calibration meaning the normalization of the touchscreen controller coordinate system and a computer video coordinate system. The function of the 8-wire touchscreen is in all other respects identical to that of the 4-wire touchscreen. An 8-wire touchscreen is shown as Fig. 3; (2) "3-wire" or "diode" touchscreen, shown as Fig. 4, which describes a 5-wire touchscreen variant that utilizes electronic diodes to switch the applied potential from the controller between two orthogonal orientations on the first resistive sheet. Two external electrical terminations of a 5-wire touchscreen are eliminated, thus only three external terminations remain. Appropriate arrangement of external electrical terminations allows 3-wire touchscreens to be controlled by 5-wire touchscreen controllers directly without modification; (3) "6-wire" describes a 5-wire touchscreen with a sixth wire, which is connected to an electrostatic shield on the external surface of the first resistive sheet. This electrostatic shield reduces noise coupled into the touchscreen from common electronic displays. (To be effective, this shield must have low resistivity, and the connection to it should be made by a very low resistance bus bar. This connection will be improved by application of the current invention instead of conventional screen printed bus bars) ; (4) "7-wire" touchscreens are 3-wire (diode) touchscreens with four additional external circuits. Said circuits are each connected to one of the four edges of the first resistive sheet as shown in Fig 5., and provide a signal to the controller that allows automatic calibration of the touchscreen system.. In practice the connection of said additional circuits to the touchscreen may be made to one of the diodes at the point of electrical contact of the diode with the resistive film for the active region of the touchscreen, or the connection for said external circuit may be made separately from the diode contact yet proximate the edge of the active area of the touchscreen. This operation of this touchscreen, excepting the function of automatic calibration, is identical to that of the 3-wire touchscreen. While the description of this automatic calibration technique is given when considering 7-wire touchscreens, it is equally applicable to the described 5-wire or 6-wire touchscreens. Further, the addition of additional calibration circuits to any touchscreen may change the popular description of the type of touchscreen, but such descriptions and modifications will be seen to remain within the scope of the present invention. Phares (U. S. Patent No. 5,815,141) describes a two sheet resistive touchscreen with a subdivided conductive film on the second sheet which provides for discrimination among objects touching the upper surface of the touchscreen, With two sections of the second sheet it is technically a 6-wire touchscreen, but it is also considered to be a 5-wire analog resistive touchscreen for purposes of the present invention.

A novel 5-wire resistive touchscreen design by Hurst, et.al.,(U.S. Patent 6,650,319) incorporates simplified peripheral circuits disposed on the edges or corners of the first resistive sheet. By suitable manipulation of the resistivities of the first sheet and of the peripheral circuits connected to the first sheet, and by the use of appropriate mapping algorithms, this invention describes resistive or capacitive touchscreens which may have uniform orthogonal equipotential voltage points, or which may achieve the same result with non-uniform distributions coupled with appropriate mapping algorithms by the controller. A further object of the present invention is to more predictably and consistently produce the resistivities of the peripheral circuits required in this touchscreen that result in the desired resistivity ratios between the electrodes of the peripheral circuits described and the associated resistive sheet.

Capacitive touchscreens may be considered as a 5-wire touchscreen without a second conductive sheet. Pepper, Jr., (U.S. Patent 4,198,539) and others describe these inventions. The user's finger or other conductive stylus of appropriate conductivity is substituted for the second conductive sheet of the 5-wire touchscreen, and functions to sink current from the first resistive sheet. Because the resistive sheet is typically overcoated with some transparent insulating material for optical and mechanical reasons, the controller drive signal, which may be applied as previously described for the 5-wire resistive touchscreen, or may be applied simultaneously to all four drive circuits, is typically an alternating current signal at a frequency of about 10 kilohertz (KHz) or higher. As is known to those skilled in the art, capacitive touchscreens may employ electrical circuits for linearization and application of voltage gradients or current distributions that are identical to those circuits employed for equivalently sized resistive touchscreens, and the considerations for the object of the present invention will be seen to apply for these capacitive touchscreens as well.

One of the primary specifications of a touchscreen system is the accuracy or linearity of the touchscreen. While there is normally some software at the computer level which maps the coordinate space of the touchscreen to the coordinate space of the display (e.g., a calibration program) the linearity of the touch system is a description of how well the touchscreen or the combination of the touchscreen and its associated controller match a Cartesian coordinate space. The method of meeting the stated linearity is critical to understanding the design of the touchscreen and the intent of the present invention.

Surface wave and infrared touchscreens are inherently capable of nearly perfect linearity, as the position of the surface wave reflectors and the infrared optical device pairs which determine the location of a touch are fixed in position, and function only with dedicated controllers designed for the purpose. The scope of the present invention does not include these devices. However, the linearity of touchscreens which work on the principle of a resistive voltage divider, namely, analog resistive, and capacitive, are dependent on electrical and mechanical characteristics of numerous materials and processes, and thus must be designed and manufactured with attention to all of these materials and processes. The result is that resistive and capacitive touchscreens, while simple in principle, are often difficult to manufacture, and which usually employ one of two very different methods to achieve the stated linearity of the touch system. The first method assumes that the touchscreen controller will process and report touch position information that is always proportional to the voltage received from the touchscreen. While some averaging and analog or digital filtering of multiple readings by the controller of the same touch location may occur, there is no non-linear or non-orthogonal mapping of the touch voltages to accurately describe the Cartesian space. This means that the touchscreen has equipotential voltage loci in response to an applied potential from the controller that are straight lines, are parallel to the appropriate mechanical axis of the touchscreen, and are orthogonal to the equipotential voltage loci for the other axis of the touchscreen. While this design criterion usually means that close attention to materials and design are critical, and that extensive testing of the finished touchscreen may be required for verification of the stated linearity specification, it also means that such a touchscreen is also not matched to a specific controller or external memory circuit (see second method) and requires no linearization to achieve its stated linearity specification. The touchscreen may be also used with little or no sacrifice in linearity with touchscreen controllers designed and manufactured by a multiplicity of third party controller vendors. This interoperability capability is a significant feature of the analog resistive touch market today. The second method of achieving the stated linearity of a touch system does not rely on precisely straight and orthogonal equipotential voltage loci on the first resistive sheet; rather, the Cartesian coordinates developed by the controller from the processed voltages are the result of a mapping algorithm. Typically this algorithm is a linear interpolation, and depends on a multipoint data array generated by precisely touching many points on the touchscreen, the points to be touched being generated by a software program designed for the purpose. As every touchscreen is unique, the routine must be run for every touchscreen as part of the manufacturing process, or prior to use by the end user. The resulting data array is stored in Non-Volatile Random Access Memory (NVRAM) either in the controller circuitry or in an external circuit that may be read by the controller, and is used as reference points for the interpolation algorithm. Nine and twenty-five point linearization routines are common. In practice this algorithm has the most benefit in correcting relatively small (less than 5%) errors in linearity near the edges of the active area that are substantially piecewise linear between adjacent reference points, and in matching a substantially linear touchscreen to non-linear displays that are also piecewise linear between adjacent reference points. An example of a non-linear display is a CRT with typical horizontal scan characteristics—one or both vertical edges may be non-linear compared to the middle portion of the display. The results of this linearization technique are generally favorable when the touchscreen is used in single touch types of applications. Some impairment of speed of response is seen when used in fast motion continuous touch applications. Another consequence is that a third-party controller may not be designed to perform this same type of linearization. While the touchscreen and this third party controller may function adequately together for some applications, the linearity of the touch system is likely to suffer near the edges, and particularly in the corners of the touchscreen. Such linearity problems will be especially noticeable in applications where graphical user interface (GUI) "desktops" are controlled with the touchscreen rather than application programs designed for touch control. These GUI desktops typically have small targets, in the corners of the display, that must be touched to start or stop application programs or the computer itself. A further consequence is that the NVRAM chip must be programmed at the factory, with increased expense for the manufacturer, or by the customer, which increases the opportunities for mistakes in performing the linearization.

There are many elements of touchscreen design and materials that affect the resolution, precision and accuracy of the touch location acquired from the touchscreen itself. Further, elements of material selection and touchscreen design can have a significant affect on service life and durability. Some of these resolution, precision and accuracy elements are: (1) uniformity of the resistivity of the resistive film, (2) equal resistance of external drive circuits for 5-wire touchscreens, (3) an acceptable ratio of corner-to-corner resistance to drive trace resistance in 5-wire touchscreens, (4) an acceptable ratio of sheet resistivity to drive trace resistance in 4-wire touchscreens, (6) uniform resistivity of 5-wire touchscreen peripheral circuit electrodes, and (7) contact resistance between and adhesion of the peripheral circuit electrodes and the resistive or conductive film in 5-wire and 4-wire touchscreens. Some of the durability and service life elements are: (1) contact resistance and adhesion of the peripheral circuit electrodes to the resistive or conductive film, and (2) consistency of contact between peripheral circuit terminations and external cables. One aspect of the present invention is to improve many of the above listed design and manufacturing features.

In the prior art touch panel, irrespective of whether 3 wire, 4 wire, 5 wire, 6 wire, 7 wire or 8 wire peripheral circuits are implemented in the wiring thereof, the circuits are most often formed by printing conductive ink (e.g., silver paste) on the transparent conductive layer of the glass substrate by means of screen printing in a manufacturing process. Quality of the formed circuits has the following problems due to the limitations of screen printing and the properties of the conductive ink. As a result, the quality and the manufacturing cost of touchscreens are adversely affected. These problems are detailed below:

(i) Uncontrollable uniformity and stability of resistance. The equation of calculating resistance of a conductor is as follows:

$$R = \rho * L/A = \rho * L/d * h$$

where R is the resistance of the conductor, p is the resistivity of the material forming the circuit, A is the cross section of the circuit, d is the width of the circuit, and h is the thickness of the circuit. Only width and thickness are parameters that may affect the total resistance of a known circuit since the material and the length of the circuit paths are already known. That is, a uniform circuit is the key to obtain a reliable resistance. However, the inked area of the conductive ink layer is typically less than 50% of the print area due to the size of meshes of the screen when the conductive ink (e.g., silver paste) is printed on the transparent resistive layer. As a result, an uneven surface is formed at every position on the printed circuits. Moreover, it is difficult to control thickness uniformity and registration of the circuits due to ink viscosity, squeegee pressure and blade sharpness, snap-off distance, and other parameters well known to those skilled in the art of screen printing. This is particularly inappropriate for products having a very high accuracy requirement with respect to line spacing and edge quality. As a result, touch panels manufactured by the prior screen printing cannot meet the demand of quality. Similar problems are encountered in lithography processes and are not detailed here.

(ii) Poor adhesion to the surface of conductive glass. Drying and curing is performed on the transparent resistive layer after the conductive ink (e.g., silver paste) for forming a circuit has been printed on the transparent resistive layer by the screen print process.. Hardness of the circuit is measured by a standard pencil hardness measurement instrument. The result shows that at most 4H pencil hardness can be achieved by this process on glass substrates. Such circuits are too soft to withstand other parts of the manufacturing process. Consequently, considerable care in manufacturing must be taken to avoid damage to these circuits in-process, and additional insulating layers must be overlaid on the glass to provide long-term protection of these circuits.

(iii) Poor weathering and chemical properties. When forming liquid silver paste for the screen printing process, there is about 20% solvent contained in the silver paste. This solvent should be evaporated during the drying and curing process, which may be by thermoset or ultraviolet light.. However, residues remain, particularly if thick traces are printed. Residual solvent or moisture in the ink will tend to degrade the adhesion of the silver to the transparent resistive layer, particularly if an insulator or another solvent or UV based adhesive is printed over the exposed silver paste. Subsequent exposure of the finished product to moisture may further degrade the adhesion of the silver-resistive film interface, resulting in deterioration of the linearity of the touchscreen.

(iv) Difficulties in further processing and uncontrollable quality. Whether the conductive ink is UV curable or thermosetting, difficulties in maintaining the consistency of the screen printed ink are well known to those skilled in the art. Despite the checks on viscosity that may be made at the beginning of a production run, the viscosity of the ink is continuously changing as the run progresses. Further, because the ink is expensive, and disposal is complicated by considerations of hazardous waste, there is always a goal of recycling unused ink. Manufacturer's recommendations about the proper capturing and reconstituting of the unused ink are vague, and lead to uncertain quality and consistency of traces printed with recycled ink.

(v) Ohmic connections. Reliable interconnects between electrical circuits in resistive and capacitive touchscreens are critical to maintaining proper function and linearity of the touchscreen. Circuits formed by the printing of conductive ink may only be interconnected to other electrical circuits by overlapped printing of one circuit upon another, or by use of conductive tapes, conductive particles embedded in a matrix which may or may not contain an adhesive of some sort, or by mechanical contact. While there are many novel and reliable interconnection systems for specific applications, the general use of these systems to interconnect conductive ink circuits to other circuits, such as cables and first sheet to second sheet electrical contacts, is not as reliable as soldering. Circuits formed by the use of the present invention may be soldered to other circuits when developed on appropriate substrates such as glass and various metals, and the reliability of the interconnects to circuits formed by the present invention is significantly enhanced even when said printing, conductive tape, conductive particle or mechanical contact methods are used, because of the increased hardness of the circuits of the present invention compared to conductive ink circuits. The increased hardness reduces deformation of the plated circuit material, better maintaining contact of the circuit to an interconnect material, particularly when conductive particle interconnect systems are used.

The potential effects of the items (i) through (v) on the performance of the completed touchscreen are numerous:

(a) Drive traces, (e.g., the previously noted conductive traces on a first or second resistive sheet) which connect the drive or control signals from the controller to the peripheral circuits proximate the edge of the first or second resistive or conductive sheet) may not have equal resistance. While it is possible to design drive traces that have equal resistance from the external cable attachment point to the connection point of the peripheral circuit proximate the edge of the resistive sheet, the manufacturing process may not yield the same resistance for each drive trace. In a 5-wire touchscreen, unequal drive trace resistances will cause a non-linearity of the touchscreen. This non-linearity will occur in both axes, and will be proportional to the ratios of the screen resistances to the drive trace resistances for the two nodes of the peripheral circuits where the drive traces connect. The details of computing the magnitudes of these non-linearities are well known to those skilled in the art of these touchscreens.

(b) The peripheral circuits of both the 4-wire and 5-wire touchscreen types apply a potential along the entire locus of the appropriately driven peripheral circuit proximate the edge of the active area of the touchscreen. In 4-wire designs, the bus bars are continuous. The current flow that results from a potential applied between the bus bars at the ends of each sheet, as previously described, should be of equal density at any point along a straight line parallel the appropriate major axis of the touchscreen, near the interface between the bus bar and the resistive sheet to which it is attached. This also assumes that the resistive sheet is continuous and of uniform resistivity. If the applied potential on each driven edge deviates at any point, the resultant current flow will also not be uniform. This will cause a non-linearity in the touchscreen. Any change in the resistivity from the design value, and any deviation in the adhesion of the bus bar to the underlying resistive sheet, will change the potential, and thus the resulting current, at the considered location. Again a non-linearity of the touchscreen will result. While it is possible to increase the design width of the bus bar perpendicular to the direction of current flow on the resistive sheet in anticipation of this problem, the mechanical size of the touchscreen may be increased unacceptably. In 5-wire touchscreens, the peripheral circuits are frequently discontinuous, and the drive traces attach to the peripheral circuits at the nodes joining two circuits instead of the middle or end of a single bus bar as in the 4-wire case, but the same general principles as described for the 4-wire case apply. Poor consistency in the resistivity of the elements of the peripheral circuit and poor adhesion of the elements to the resistive film will result in non-uniform current flow and touchscreen non-linearity.

Some vendors address the issue of screen printing quality and consistency of conductive ink by screen printing a silver frit for the desired circuit, and then firing the screen printed glass. While the results of this process can be of good quality, adhesion and hardness, the firing process temperatures also affect the resistivity of the resistive film surrounding the silver frit. Thus the design of the silver frit pattern must be adjusted to compensate for the changes in resistivity of the frit, introducing various uncertainties in the design that ultimately affect the linearity of the touchscreen.

Thus, it is desirable among touchscreen designers and manufacturers to provide a novel manufacturing process for manufacturing quality circuits.

## SUMMARY OF THE INVENTION

An object of the present invention is to provide a method of manufacturing a circuit layout on a touch panel by utilizing metal plating technology, comprising uniformly coating a conductive metal or conductive oxidized metal on predetermined areas proximate edges of a transparent conductive layer on a transparent glass substrate for forming a circuit by utilizing metal plating technology. By utilizing the present invention, the above drawbacks of printing a conductive ink (e.g., silver paste) on a transparent conductive layer of glass substrate by the prior screen printing can be overcome. Moreover, the present invention has the advantages of uniform thickness of circuit, higher hardness, better adhesion of the plated material to the underlying substrate, whether it is a resistive film or bare glass, improved weathering and chemical properties, and solderability. A further advantage of the present invention is the lower resistivity of plated metal compared to screen printed conductive ink. The advantage is achieved in the design of the touchscreen by reducing drive trace and peripheral circuit electrode widths, thus allowing the overall size of the touchscreen to be reduced consistent with the application requirement. Yet another advantage of the present invention is the reduced effect of heating and contamination of the resistive film, which may change its resistivity, compared to the firing process of silver frit-based touchscreen electrode and drive trace designs.

The above and other objects, features and advantages of the present invention will become apparent from the following detailed description taken with the accompanying drawings.

## BRIEF DESCRIPTION OF THE DRAWINGS

FIG. 1 is an exploded view of a conventional 4-wire touchscreen;
FIG. 2 is the exploded view of a 5-wire touchscreen
FIG. 3 is the exploded view of an 8-wire touchscreen
FIG. 4 is the exploded view of a 3-wire touchscreen
FIG. 5 is the exploded view of a 7-wire touchscreen
FIG. 6 is a flow chart of a preferred embodiment of the invention;
FIG. 7 schematically depicts a spray rinsing performed on the resistive glass according to the preferred embodiment of the invention;
FIG. 8 is a cross-sectional view showing resist ink coated on the resistive glass according to the preferred embodiment of the invention;
FIG. 9 schematically depicts an etching performed on the resistive glass according to the preferred embodiment of the invention;
FIG. 10 schematically depicts an ink removal performed on the resistive glass according to the preferred embodiment of the invention;

FIG. 11 is a cross-sectional view showing mask formed on the resistive glass according to the preferred embodiment of the invention;
FIG. 12 schematically depicts a sputtering performed on the resistive glass according to the preferred embodiment of the invention;
FIG. 13 is a perspective view of a formed resistive glass according to the preferred embodiment of the invention; and
FIG. 14 is a perspective view of a formed resistive glass according to another preferred embodiment of the invention.

## DETAILED DESCRIPTION OF THE PREFERRED EMBODIMENTS

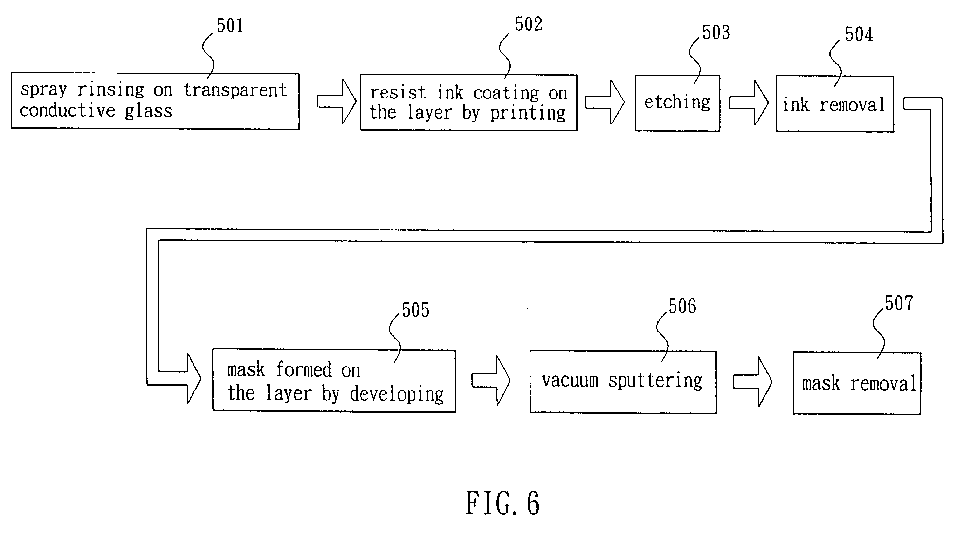

Referring to FIG. 6, there is shown a method of manufacturing a circuit layout on a touchscreen by utilizing metal plating technology in accordance with a preferred embodiment of the invention. The method comprises uniformly coating conductive metal on areas proximate edges of a resistive glass of a touch panel for forming a required circuit by utilizing metal plating technology. The method comprises the steps of:

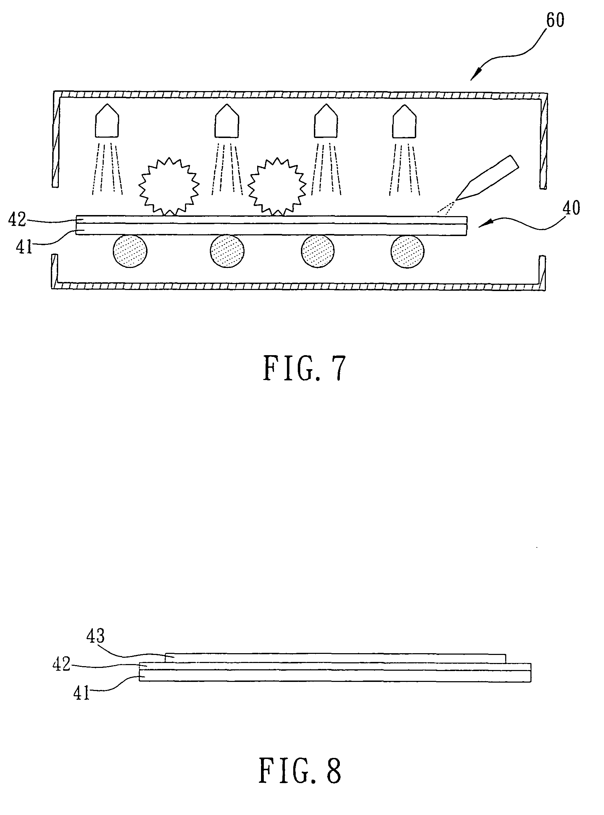

In step 501, a spray rinsing performed on resistive glass 40 is illustrated in conjunction with FIG. 7. First, convey a transparent resistive glass 40 for manufacturing touchscreen to a rinse device 60. The resistive glass 40 comprises a glass substrate 41 and a transparent resistive layer 42 made of ITO coated on the glass substrate 41. The rinse device 60 is adapted to perform spray rinsing, scrubbing, and blowing on the transparent resistive layer 42 for removing debris or dirt.

In step 502, a resist ink coating performed on transparent resistive layer 42 after spray rinsing is illustrated in conjunction with FIG. 8. In detail, coat resist ink on a reserved central portion of the transparent resistive layer 42 for forming a resist ink layer 43 by printing.

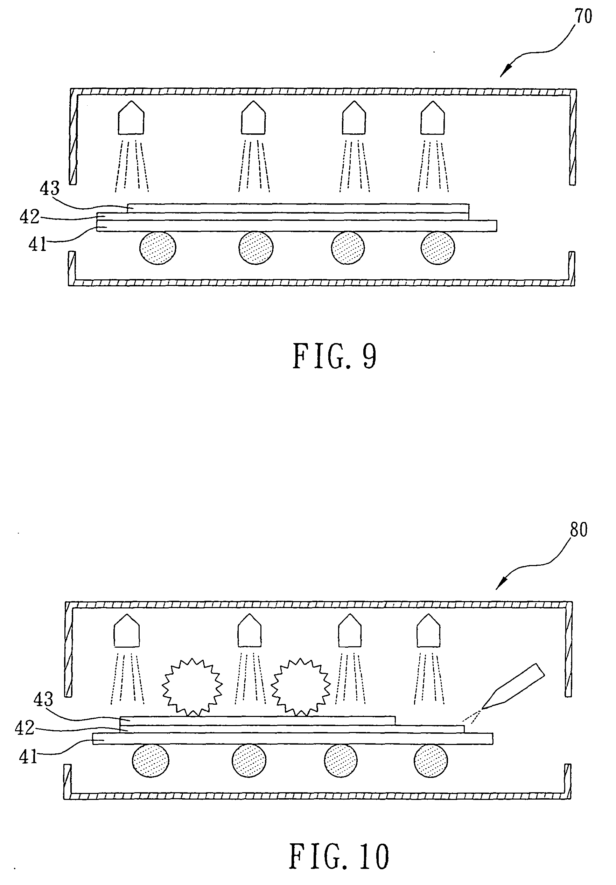

In step 503, an etching performed on the resistive glass 40 is illustrated in conjunction with FIG. 9. In detail, convey the resistive glass 40 to an etching tank 60 for etching the transparent resistive layer 42. As an end, areas proximate edges of the glass substrate 41 and areas without the resist ink layer 43 being coated on the transparent resistive layer 42 are removed.

In step 504, an ink removal of the resist ink layer 43 is illustrated in conjunction with FIG. 10. In detail, convey the resistive glass 40 to an ink removal tank 80 for removing the resist ink layer 43 coated on the transparent resistive layer 42.

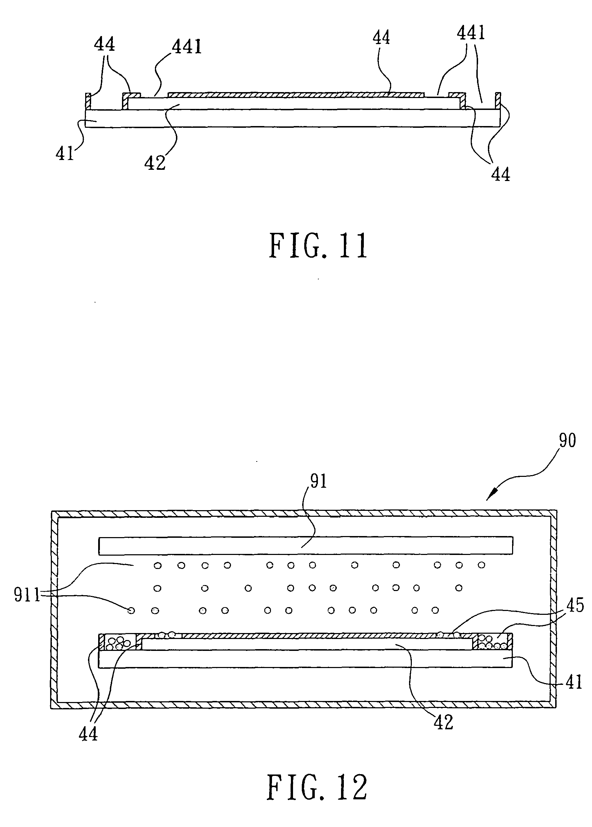

In step 505, a mask forming on the transparent resistive layer 42 is illustrated in conjunction with FIG. 11. In detail, after the removal of ink, form a mask 44 on the glass substrate 41 and the transparent resistive layer 42 by developing. As an end, predetermined portions 441 of a circuit to be formed are exposed.

In step 506, a sputtering performed on the predetermined portions 441 is illustrated in conjunction with FIG. 12. In detail, convey the resistive glass 40 to a sputtering room 90 for sputtering the predetermined portions 441 of a circuit to be formed. As an end, conductive metal 91 (e.g., silver ions) contained in a target 91 (e.g., silver) are ionized to uniformly coat on the predetermined portions 441 by impinging.

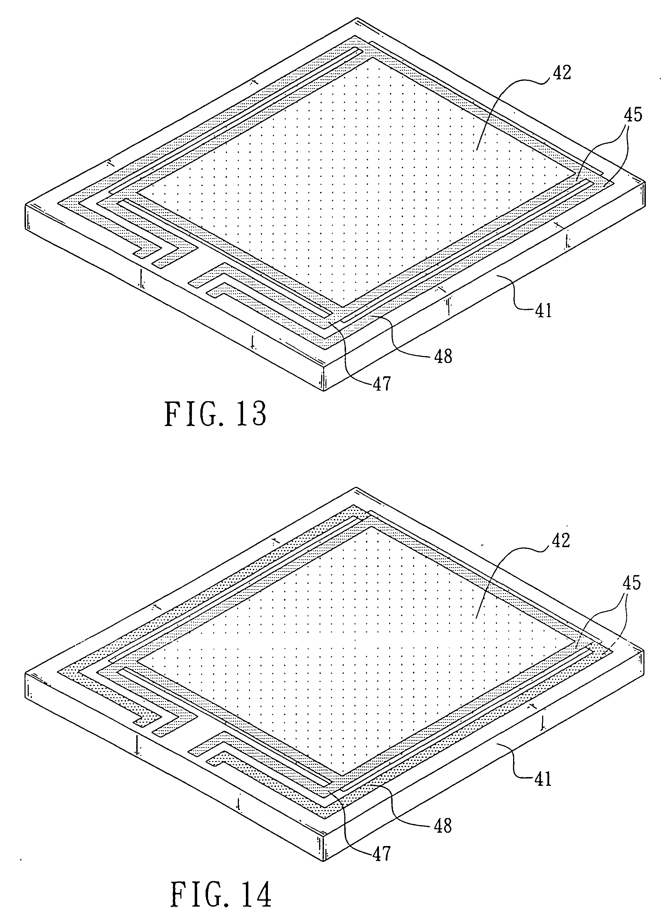

In step 507, forming a required circuit is illustrated in conjunction with FIG. 13. In detail, a required circuit will be formed once the conductive metal 91 has coated a sufficient thickness on the predetermined portions 441. Next, remove the mask 44 for forming the required circuit 45 on the resistive glass 40.

In the embodiment, the circuit 45 has the advantage of uniform thickness because it is formed by uniformly coating the conductive metal 911 contained in the target 91. The circuit 45 may be mechanically narrower than a comparable circuit formed by screen printing of conductive ink, because of the lower resistivity per unit area and thickness of a selected metal plating than that of the conductive ink. Moreover, the circuit 45 has the advantage of stable impedance and higher hardness. For example, a circuit formed of silver can pass 9H (or even higher) pencil hardness test in an experiment. In addition, as stated above, in the embodiment the required circuit 45 is formed by directly coating the conductive metal 911 on the predetermined portions of the glass substrate 41 and the transparent resistive layer 42 by utilizing metal plating technology. As such, the circuit 45 has an acceptable quality and is free from the adverse effects of solvent or moisture. Also, products having uniform quality can be produced as long as operating parameters are correctly set on the involved machines in the manufacturing process. This can eliminate the problem of excessively relying on expertise and experience of printing workers. Moreover, in the metal plating process of the embodiment there is no limitation on effective working hours with respect to the target 91 and the contained conductive metal 911 imposed as that by the prior art silver paste. As an end, it is possible of eliminating the problem of regularly filling new ink and cleaning the screen print mesh, thereby greatly improving quality of the circuit 45 formed on the resistive glass 40, increasing yield, and greatly saving labor and time.

A preferred embodiment of the invention has been described above. The material contained in the transparent resistive layer is ITO in the embodiment, while it is appreciated by those skilled in the art that ITO may be replaced by another suitable material without departing from the scope and spirit of the invention. Also, sputtering and silver employed in the embodiment may be replaced by another suitable metal plating technology and material without departing from the scope and spirit of the invention. Moreover, a conductive metal other than above (i.e., silver) can be employed to coat on predetermined portions of the resistive glass 40 for forming a required circuit 45 by means of metal plating. This still falls within the scope of the invention.

In the invention circuit formed at areas proximate edges of the glass substrate has good quality and reliable impedance. Hence, it has little effect on the total performance of touch panel. Referring to FIG. 14, another preferred embodiment of the invention is shown. In the manufacturing process of resistive glass 40 it is preferred to form a circuit 47 at areas proximate edges of the transparent resistive layer 42 of the glass substrate 41 by utilizing metal plating technology. Also, another circuit 48 is formed at areas proximate edges of the glass substrate 41 by utilizing screen printing technology. Further, the circuit 47 is electrically coupled to the circuit 48. As an end, the invention not only can improve the performance of the touchscreen but also can greatly reduce the manufacturing cost.

While the invention has been described by means of specific embodiments, numerous modifications and variations could be made thereto by those skilled in the art without departing from the scope and spirit of the invention set forth in the claims.

## Claims

1. A method of manufacturing a circuit layout on a touchscreen by utilizing metal plating technology, comprising uniformly coating a conductive metal or conductive oxidized metal on predetermined areas proximate edges of a transparent resistive layer on a transparent glass substrate for forming a first circuit by utilizing metal plating technology.

2. The method of claim 1, further comprising forming a second circuit on areas of the glass substrate not coated with the transparent conductive layer by utilizing metal plating technology, wherein the second circuit is electrically coupled to the first circuit of claim 1.

3. The method of claim 1, further comprising forming a third circuit on areas of the glass substrate not coated with the transparent conductive layer by utilizing screen printing technology, wherein the third circuit is electrically coupled to the second circuit.

4. The method of claim 1, wherein the transparent resistive layer is made of ITO.

5. The method of claim 1, wherein the metal plating technology is sputtering.

6. The method of claim 5, wherein the conductive metal is formed by ionization by impinging a conductive metal contained in a target by sputtering.

7. The method of claim 6, wherein the target is made of silver.

21    20    22

33    to controller    34

12

10    31

11    32    to controller

FIG. 1 (Prior Art)

20

to controller

10

to controller

FIG. 2 (Prior Art)

FIG. 3 (Prior Art)

FIG. 4 (Prior Art)

FIG. 5 (Prior Art)

spray rinsing on transparent conductive glass — 501

resist ink coating on the layer by printing — 502

etching — 503

ink removal — 504

mask formed on the layer by developing — 505

vacuum sputtering — 506

mask removal — 507

FIG. 6

42

41

40

FIG. 7

43

42

41

FIG. 8

FIG. 9

FIG. 10

FIG. 11

FIG. 12

FIG. 13

FIG. 14

**European Patent Office**

## EUROPEAN SEARCH REPORT

Application Number

EP 04 01 5463

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 483 498 B1 (KANZAKI EISUKE ET AL) 19 November 2002 (2002-11-19) * column 4, line 44 - column 5, line 20; figures 1,3 * * column 8, line 48 - line 58 * | 1-7 | G06F3/033 |
| X | US 5 062 198 A (SUN BRIAN Y) 5 November 1991 (1991-11-05) * column 3, line 62 - column 4, line 9; figures 1-3 * * column 5, line 18 - line 35; figures 6-8 * | 1-7 | |
| D,A | US 6 549 193 B1 (GEAGHAN BERNARD O ET AL) 15 April 2003 (2003-04-15) * column 3, line 33 - line 45 * | 1 | |
| A | US 6 507 337 B1 (NODA KAZUHIRO ET AL) 14 January 2003 (2003-01-14) * column 6, line 13 - line 44 * | 2,3 | |
| A | US 3 945 903 A (SVENDOR JOHN S ET AL) 23 March 1976 (1976-03-23) * column 1, line 11 - line 15 * | 5,6 | **TECHNICAL FIELDS SEARCHED** (Int.Cl.7) G06F |
| A | US 4 503 286 A (KUBO YOSHIZO ET AL) 5 March 1985 (1985-03-05) * column 1, line 24 - line 30 * | 5-7 | |

The present search report has been drawn up for all claims

| Place of search | Date of completion of the search | Examiner |
|---|---|---|
| The Hague | 30 November 2004 | Schröter, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 04 01 5463

This annex lists the patent family members relating to the patent documents cited in the above-mentioned European search report.
The members are as contained in the European Patent Office EDP file on
The European Patent Office is in no way liable for these particulars which are merely given for the purpose of information.

30-11-2004

| Patent document cited in search report | | | Publication date | Patent family member(s) | | Publication date |
|---|---|---|---|---|---|---|
| US 6483498 | B1 | | 19-11-2002 | NONE | | |
| US 5062198 | A | | 05-11-1991 | NONE | | |
| US 6549193 | B1 | | 15-04-2003 | US 2003137498 A1 | | 24-07-2003 |
| US 6507337 | B1 | | 14-01-2003 | JP 2000089914 A | | 31-03-2000 |
| | | | | JP 3366864 B2 | | 14-01-2003 |
| | | | | JP 2000085051 A | | 28-03-2000 |
| | | | | JP 2000132341 A | | 12-05-2000 |
| | | | | CN 1277696 T | | 20-12-2000 |
| | | | | EP 1031111 A1 | | 30-08-2000 |
| | | | | WO 0016251 A1 | | 23-03-2000 |
| | | | | TW 448399 B | | 01-08-2001 |
| US 3945903 | A | | 23-03-1976 | NONE | | |
| US 4503286 | A | | 05-03-1985 | JP 59006242 U | | 14-01-1984 |
| | | | | JP 59033070 Y2 | | 14-09-1984 |

For more details about this annex : see Official Journal of the European Patent Office, No. 12/82